# EUROPÄISCHE PATENTSCHRIFT

(11) **EP 1 393 992 B1**
(45) Veröffentlichungstag und Bekanntmachung des Hinweises auf die Patenterteilung: **25.05.2005**
(21) Anmeldenummer: 03016656.5
(22) Anmeldetag: 31.07.2003
(51) Int. Cl.: B60R 21/20

(54) **Airbag-Modul sowie Baugruppe aus einem Lenkrad und einem Airbag-Modul**
Airbag module and assembly comprising a steering wheel and an airbag module
Module airbag et ensemble comprenant un volant et un module airbag

(30) Priorität: 27.08.2002 DE 20213145 U
(43) Veröffentlichungstag der Anmeldung: 03.03.2004
(73) Patentinhaber: TRW Automotive Safety Systems GmbH, 63743 Aschaffenburg (DE)
(72) Erfinder: Schneider, Michael, Dr., 63843 Niedernberg (DE)
(74) Vertreter: Strass, Jürgen

(56) Entgegenhaltungen:
- GB-A- 2 270 657
- US-A- 5 235 146
- US-A- 5 410 114
- PATENT ABSTRACTS OF JAPAN vol. 1997, no. 07, 31. Juli 1997 (1997-07-31) & JP 09 058393 A (BRIDGESTONE CORP), 4. März 1997 (1997-03-04)

## Beschreibung

Die Erfindung betrifft ein Airbag-Modul zum Einbau in ein Lenkrad, mit einem Gasgeneratorträger und einer Abdeckkappe, die durch eine Schnappverbindung miteinander verbunden sind. Die Erfindung betrifft ferner eine Baugruppe aus einem Lenkrad und einem erfindungsgemäßen Airbag-Modul.

Bei Airbag-Modulen werden zur Befestigung von Abdeckkappen am Modul neben Niet- und Schraubverbindungen vor allem kostengünstige Schnappverbindungen verwendet. Solche Schnappverbindungen müssen in der Regel durch zusätzliche Elemente gesichert werden, um ein mögliches Lösen der Schnappverbindung auszuschließen.

Die US-A-5 410 114 zeigt ein Airbag-Modul, bei dem der Gasgenerator und die Abdeckkappe miteinander verbunden und an einer Basisplatte befestigt sind. Die Basisplatte ist federnd gegenüber dem Lenkrad gelagert. Aus der GB-A-2 270 657 ist ein Airbag-Modul bekannt, bei dem der Gasgenerator und die Abdeckkappe miteinander verbunden und die Abdeckkappe federnd gegenüber dem Lenkrad abgestützt ist.

Die Erfindung schafft ein Airbag-Modul mit einem Gasgenerator und einer daran befestigten Abdeckkappe, das ohne zusätzliche Sicherungselemente auskommt.

Gemäß der Erfindung ist vorgesehen, daß sowohl am Gasgeneratorträger als auch an der Abdeckkappe Vorsprünge ausgebildet sind, wobei jeweils ein Vorsprung des Gasgeneratorträgers und ein Vorsprung der Abdeckkappe einen gemeinsamen Fortsatz bilden, auf dem ein erstes Ende einer Schraubenfeder aufnehmbar ist. Schraubenfedern sind kostengünstige Konstruktionselemente, die üblicherweise zur Rückstellung des Airbag-Moduls im Lenkrad nach einem Niederdrücken des gesamten Airbag-Moduls zur Hupenbetätigung verwendet werden. Die Schraubenfedern werden erfindungsgemäß zusätzlich dazu verwendet, ein Lösen der Schnappverbindung zwischen Gasgeneratorträger und Abdeckkappe zu verhindern, d.h. die Schraubenfedern übernehmen die Funktionen Rückstellung des Airbag-Moduls und Sichern der Schnappverbindung zwischen Gasgeneratorträger und Abdeckkappe. Durch die so erreichte Einsparung zusätzlicher Sicherungselemente vereinfacht sich die Montage, und die Montagekosten können verringert werden. Der Mehraufwand zur Formung der erforderlichen Vorsprünge beim Gasgeneratorträger und bei der Abdeckkappe ist demgegenüber zu vernachlässigen.

Vorzugsweise sind die Fortsätze an der Unterseite des Airbag-Moduls vorgesehen, die einem an die Lenkradnabe angrenzenden Bereich gegenüberliegt.

Eine sichere Halterung der Schraubenfedern ist dadurch gewährleistet, daß der Durchmesser der Fortsätze größer als der Innendurchmesser der zugehörigen Schraubenfedern ist, oder daß die Fortsätze einen Wulst aufweisen.

Gemäß der bevorzugten Ausführungsform weist wenigstens einer der Fortsätze eine Kontaktfläche zur Herstellung eines elektrischen Kontakts auf, so daß über den Fortsatz der Kontakt zur Auslösung des Hupsignals eingebracht werden kann.

Die Erfindung sieht auch eine Baugruppe aus einem Lenkrad und einem erfindungsgemäßen Airbag-Modul vor.

Vorteilhafte Ausgestaltungen der Baugruppe sind in den Unteransprüchen 7 bis 11 angegeben.

Weitere Merkmale und Vorteile der Erfindung ergeben sich aus der folgenden Beschreibung einer bevorzugten Ausführungsform und aus den beigefügten Zeichnungen, auf die Bezug genommen wird. In den Zeichnungen zeigen:
- Figur 1 ein an einem Lenkrad angebrachtes erfindungsgemäßes Airbag-Modul;
- Figur 2 eine Schnittansicht entlang der Linie A-A in Figur 1;
- Figur 3 eine Schnittansicht entlang der Linie B-B in Figur 2; und
- Figur 4 eine Schnittansicht einer Ausführungsvariante entsprechend der Darstellung in Figur 2.

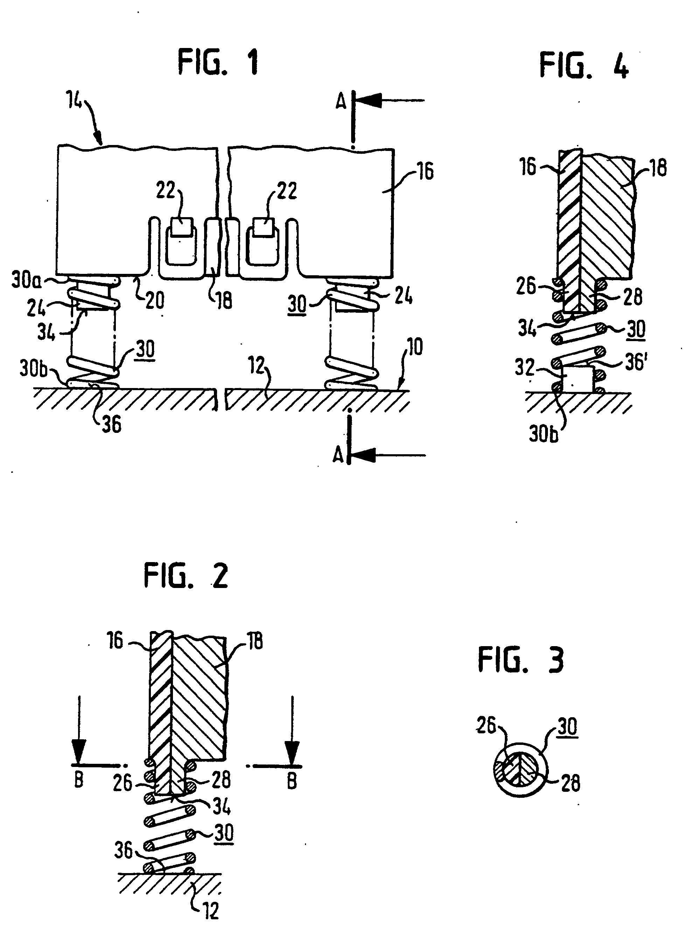

In Figur 1 ist schematisch ein an einem Lenkrad 10 (von dem nur ein an die Lenkradnabe angrenzender Bereich 12 angedeutet ist) angebrachtes Airbag-Modul 14 dargestellt, das eine Abdeckkappe 16 und einen Gasgeneratorträger 18 aus Kunststoff umfaßt (siehe auch Figur 2). Die Abdeckkappe 16 umgibt den Gasgeneratorträger 18 im wesentlichen vollständig mit Ausnahme der dem Bereich 12 des Lenkrads 10 gegenüberliegenden Unterseite 20 des Airbag-Moduls 14. Die Abdeckkappe 16 ist mit dem Gasgeneratorträger 18 über mehrere an den aneinander anliegenden Seitenwänden des Gasgeneratorträgers 18 und der Abdeckkappe 16 vorgesehenen Schnappverbindungen 22 verbunden.

Auf der Unterseite 20 des Airbag-Moduls 14 sind Fortsätze 24 gebildet, die in Richtung des Bereichs 12 weisen. Die Fortsätze 24 setzen sich jeweils, wie in den Figuren 2 und 3 zu erkennen ist, aus einem Vorsprung 26 der Abdeckkappe 16 und einem Vorsprung 28 des Gasgeneratorträgers 18 zusammen. Jeder Fortsatz 24 nimmt eine Schraubenfeder 30 auf, die sich mit ihrem ersten Ende 30a an der Unterseite des Airbag-Moduls und mit ihrem zweiten Ende 30b an einer Fläche abstützt, die an dem Bereich 12 des Lenkrads 10 gebildet ist. Der Durchmesser eines einzelnen Fortsatzes 24 weist im Verhältnis zur zugehörigen Schraubenfeder 30 entweder ein Übermaß auf oder ist mit einem entsprechenden Wulst versehen (nicht gezeigt), so daß die Schraubenfeder 30 sicher auf dem Fortsatz 24 gehalten wird. Die Schraubenfedern 30 sind so ausgelegt, daß sie bei dynamischen Belastungen, wie sie etwa bei einem Unfall auftreten können, nicht von den Fortsätzen 24 abrutschen oder sich auf sonstige Weise lösen, beispielsweise durch radiale Aufweitung.

Die Schraubenfedem 30 erfüllen eine Doppelfunktion. Zum einen dienen sie der Rückstellung des Airbag-Moduls 14, wenn zur Auslösung eines Hupsignals durch Druck auf die Abdeckkappe 16 das gesamte Modul 14 in Richtung des Bereichs 12 niedergedrückt wird. Zum anderen sichern die Schraubenfedern 30 die Verbindung zwischen Abdeckkappe 16 und Gasgeneratorträger 18. Die Schraubenfedern 30 halten die Vorsprünge 26 und 28 der Abdeckkappe 16 bzw. des Gasgeneratorträgers 18 zusammen und verhindern somit ein seitliches Verschieben zwischen Gasgeneratorträger 18 und Abdeckkappe 16, insbesondere während eines Unfalls. In Richtung der Längsachsen der Fortsätze 24 wird die Abdeckkappe 16 durch die Schnappverbindungen 22 auf dem Gasgeneratorträger 18 gehalten.

Bei der in Figur 4 dargestellten Ausführungsvariante sind die Schraubenfedern 30 auch an ihrem zweiten Ende 30b auf entsprechenden, am Lenkrad 10 gebildeten Fortsätzen 32 sicher aufgenommen, so daß das Airbag-Modul 14 alleine durch die Schraubenfedern (30) am Lenkrad 10 befestigt ist und die Schraubenfedern 30 alleine die Führung des Airbag-Moduls 14 übernehmen.

Bei einer ausreichenden Zahl von Fortsätzen 24 und Schraubenfedern 30 kann auf weitere Befestigungselemente zur Anbringung des Airbag-Moduls 14 am Lenkrad 10 vollständig verzichtet werden.

Eine oder mehrere der an der Unterseite 20 des Airbag-Moduls 14 vorgesehenen Fortsätze 24 können auch zur Ausbildung eines Hupkontakts verwendet werden. Hierzu ist die dem Bereich 12 zugewandte Seite eines Fortsatzes 24 als Kontaktfläche 34 ausgebildet. Wenn durch Niederdrücken des Airbag-Moduls 14 die Kontaktfläche 34 des Fortsatzes 24 und eine gegenüberliegend am Lenkrad 10 oder an einem dort gebildeten Fortsatz 32 (Figur 4) vorgesehene Kontaktfläche 36 bzw. 36' miteinander in Kontakt gebracht werden, wird ein Stromkreis geschlossen, der die Auslösung des Hupsignals bewirkt.

## Patentansprüche

1. Airbag-Modul zum Einbau in ein Lenkrad, mit einem Gasgeneratorträger (18) und einer Abdeckkappe (16), die durch eine Schnappverbindung (22) miteinander verbunden sind, **dadurch gekennzeichnet, daß** sowohl am Gasgeneratorträger (18) als auch an der Abdeckkappe (16) Vorsprünge (28, 26) ausgebildet sind, wobei jeweils ein Vorsprung (28) des Gasgeneratorträgers (18) und ein Vorsprung (26) der Abdeckkappe (16) einen gemeinsamen Fortsatz (24) bilden, auf dem ein erstes Ende (30a) einer Schraubenfeder (30) aufnehmbar ist.

2. Airbag-Modul nach Anspruch 1, **dadurch gekennzeichnet, daß** die Fortsätze (24) an der Unterseite (20) des Airbag-Moduls (14) vorgesehen sind, die einem an die Lenkradnabe angrenzenden Bereich (12) gegenüberliegt.

3. Airbag-Modul nach Anspruch 1 oder 2, **dadurch gekennzeichnet, daß** der Durchmesser der Fortsätze (24) größer als der Innendurchmesser der zugehörigen Schraubenfedern (30) ist.

4. Airbag-Modul nach Anspruch 1 oder 2, **dadurch gekennzeichnet, daß** die Fortsätze (24) einen Wulst aufweisen.

5. Airbag-Modul nach einem der vorhergehenden Ansprüche, **dadurch gekennzeichnet, daß** wenigstens einer der Fortsätze (24) eine Kontaktfläche (34) zur Herstellung eines elektrischen Kontakts aufweist.

6. Baugruppe aus einem Lenkrad (10) und einem Airbag-Modul (14) nach einem der vorhergehenden Ansprüche.

7. Baugruppe nach Anspruch 6, **dadurch gekennzeichnet, daß** sich die Schraubenfedern (30) mit ihrem ersten Ende (30a) an der Unterseite (20) des Airbag-Moduls (14) und mit ihrem zweiten Ende (30b) direkt oder indirekt am Lenkrad (10) abstützen.

8. Baugruppe nach Anspruch 7, **dadurch gekennzeichnet, daß** am Lenkrad (10) Fortsätze (32) gebildet sind, auf denen die zweiten Enden (30b) der Schraubenfedern(30) aufgenommen sind.

9. Baugruppe nach Anspruch 8, **dadurch gekennzeichnet, daß** das Airbag-Modul (14) alleine durch die Schraubenfedern (30) am Lenkrad (10) befestigt ist.

10. Baugruppe nach Anspruch 8 oder 9, **dadurch gekennzeichnet, daß** alleine die Schraubenfedern (30) die Führung des Airbag-Moduls (14) gegenüber dem Lenkrad (10) bewirken.

11. Baugruppe nach einem der Ansprüche 6 bis 10, **dadurch gekennzeichnet, daß** am Lenkrad (10) wenigstens eine einem Fortsatz (24) des Airbag-Moduls (14) gegenüberliegende Kontaktfläche (36, 36') gebildet ist.

## Claims

1. An airbag module for installation in a steering wheel, comprising a gas generator carrier (18) and a covering cap (16) which are connected with each other by a snap connection (22), **characterized in that** projections (28, 26) are configured both on the gas generator carrier (18) and on the covering cap (16), a projection (28) of the gas generator carrier (18) and a projection (26) of the covering cap (16) respectively forming a common extension (24) which is adapted to receive a first end (30a) of a helical spring (30).

2. The airbag module according to Claim 1, **characterized in that** the extensions (24) are provided on the underside (20) of the airbag module (14), the underside being opposite a region (12) adjoining the steering wheel hub.

3. The airbag module according to Claim 1 or 2, **characterized in that** the diameter of the extensions (24) is greater than the internal diameter of the associated helical springs (30).

4. The airbag module according to Claim 1 or 2, **characterized in that** the extensions (24) have a bead.

5. The airbag module according to any of the preceding claims, **characterized in that** at least one of the extensions (24) has a contact surface (34) for establishing an electrical contact.

6. An assembly of a steering wheel (10) and an airbag module (14) according to any of the preceding claims.

7. The assembly according to Claim 6, **characterized in that** the helical springs (30) each have a first end (30a) resting against the underside (20) of the airbag module (14) and a second end (30b) resting directly or indirectly against the steering wheel (10).

8. The assembly according to Claim 7, **characterized in that** extensions (32) are formed on the steering wheel (10), on which the second ends (30b) of the helical springs (30) are received.

9. The assembly according to Claim 8, **characterized in that** the airbag module (14) is fastened to the steering wheel (10) solely by the helical springs (30).

10. The assembly according to Claim 8 or 9, **characterized in that** the helical springs (30) alone bring about the guidance of the airbag module (14) with respect to the steering wheel (10).

11. The assembly according to any of Claims 6 to 10, **characterized in that** on the steering wheel (10) at least one contact surface (36, 36') is formed which is opposite an extension (24) of the airbag module (14).

## Revendications

1. Module d'airbag destiné à être monté dans un volant de direction, comportant un support de générateur de gaz (18) et un couvercle (16) qui sont reliés l'un à l'autre par une liaison par enclenchement (22), **caractérisé en ce que** tant sur le support de générateur de gaz (18) que sur le couvercle (16) sont réalisées des saillies (28, 26), une saillie (28) du support de générateur de gaz (18) et une saillie (26) du couvercle (16) formant respectivement un prolongement (24) commun sur lequel peut être reçue une première extrémité (30a) d'un ressort hélicoïdal (30).

2. Module d'airbag selon la revendication 1, **caractérisé en ce que** les prolongements (24) sont prévus sur la face inférieure (20) du module d'airbag (14) qui est opposée à une zone (12) adjacente du moyeu de volant de direction.

3. Module d'airbag selon la revendication 1 ou 2, **caractérisé en ce que** le diamètre des prolongements (24) est supérieur au diamètre intérieur des ressorts hélicoïdaux (30) associés.

4. Module d'airbag selon la revendication 1 ou 2, **caractérisé en ce que** les prolongements (24) présentent un bourrelet.

5. Module d'airbag selon l'une des revendications précédentes, **caractérisé en ce qu'**au moins un des prolongements (24) présente une surface de contact (34) pour établir un contact électrique.

6. Ensemble constitué par un volant de direction (10) et par un module d'airbag (14) selon l'une des revendications précédentes.

7. Ensemble selon la revendication 6, **caractérisé en ce que** les ressorts hélicoïdaux (30) prennent appui par leur première extrémité (30a) sur la face inférieure (20) du module d'airbag (14) et par leur deuxième extrémité (30b) directement ou indirectement sur le volant de direction (10).

8. Ensemble selon la revendication 7, **caractérisé en ce que** sur le volant de direction (10) sont formés des prolongements sur lesquels sont reçues les deuxièmes extrémités (30b) des ressorts hélicoïdaux (30).

9. Ensemble selon la revendication 8, **caractérisé en ce que** le module d'airbag (14) est fixé sur le volant de direction (10) seulement par les ressorts hélicoïdaux (30).

10. Ensemble selon la revendication 8 ou 9, **caractérisé en ce que** seuls les ressorts hélicoïdaux (30) produisent le guidage du module d'airbag (14) par rapport au volant de direction (10:

11. Ensemble selon l'une des revendications 6 à 10, **caractérisé en ce que** sur le volant de direction (10) est formée au moins une surface de contact (36, 36') opposée à un prolongement (24) du module d'airbag (14).
